# EUROPEAN PATENT SPECIFICATION

(11) **EP 2 008 059 B1**
(45) Date of publication and mention of the grant of the patent: **12.05.2010**
(21) Application number: 07712986.4
(22) Date of filing: 07.03.2007
(51) Int. Cl.: G01C 9/28

(54) **A BUILDING DEVICE**
KONSTRUKTIONSEINRICHTUNG
DISPOSITIF DE CONSTRUCTION

(30) Priority: 09.03.2006 GB 0604800
(43) Date of publication of application: 31.12.2008
(73) Proprietor: Figueira, John Andrew, Old Woking Surrey GU22 9LL (GB)
(72) Inventor: Figueira, John Andrew, Old Woking Surrey GU22 9LL (GB)
(74) Representative: Cordina, Kevin John
(86) International application number: PCT/GB2007/050107
(87) International publication number: WO 2007/102029

(56) References cited:
- WO-A-99/20978
- DE-A1- 10 007 101
- FR-A- 2 788 538
- GB-A- 2 279 741
- US-A- 4 168 578
- US-A- 5 813 125

## Description

### Field of the Invention

The present invention relates to a building device and, particularly but not exclusively, to a disposable building device that may be used in prefabricated building units or to form such units as well as to assist in the construction of buildings generally.

### Background

Increasingly the pressures to increase the speed at which buildings can be constructed and minimise the associated cost has created a tendency for construction artisans to use prefabricated building units. One of the driving forces in the various typical steps in constructing a building is to get the roof of the structure on as quickly as possible to render the building substantially watertight. Once watertight, the tasks of fitting out the building and adding the exterior skin, such a bricks and mortar, insulation, plasterboard etc can then be undertaken.

One commonly used building unit to facilitate the rapid erection of a building's initial framework is a stud wall. Such a building unit typically comprises a framework of studs, in the form of upright posts, supporting panels therebetween. The stud wall can form a guide for the construction of the external wall and the basis for the internal wall and associated fittings, such as insulation, electrical wiring and plasterboard and the like.

The building units are typically prefabricated away from the building site and then brought to the site en-mass for erection. When a building is erected, whether using prefabricated building units or not, is essential that the walls are plumb, i.e. substantially vertical, before being built upon further, such as with a roof or the floor of an upper level as subsequent correction of a non-plumb wall can be costly and time consuming.

Although prefabricated building units decrease the build time, the initial construction is not as rigid as more traditional building methods, such as with the use of bricks or breezeblocks. After an erected wall is in place, there can be a series of other works going on within the non-complete building and there is an inherent risk that the wall could be knocked out of plumb.

As there is a trend for buildings to be constructed within a somewhat rigid time frame, any delays and consequential expense due to walls being knocked out of plumb can be heightened due to a lack of accountability. Numerous contractors for different aspects of the building could all be working on a building site at around the same general time, but determining responsibility for non-plumb walls can be problematic.

FR2788538 discloses a device comprising a frame with surfaces which are arranged substantially perpendicular to each other. The device includes a spirit level encased in a plastic cover. The device can be incorporated in a building element.

W099/20978 discloses a device with perpendicular faces and spirit level which can be installed onto the edge of, for example, a pillar in order to check the orientation of the pillar.

DE10007101 discloses a levelling device incorporating a spirit level. The spirit level can be screwed into, for example, a floor whilst screed is poured onto the floor in order to check the level of the poured floor.

US5813125 discloses a four way corner level which can be arranged such that it comprises two perpendicular faces. The corner level incorporates perpendicularly arranged spirit levels to allow the horizontal and vertical orientation to be monitored. The instrument may be secured to a metal object by magnetic strips, or alternatively, screwed or otherwise secured to, for example pipes, carpentry or masonry.

It is an object of the present invention to address the aforementioned drawbacks and provide a means by which the process of erecting a building is improved.

### Summary of the Invention

According to a first aspect of the present invention there is provided a device comprising a frame having at least two surfaces arranged substantially perpendicular to each other and at least one level indicator attached to the frame, wherein at least a portion of the device with the at least one level indicator attached is adapted to be fixed to a building element, wherein the device has at least one dividing section adapted to facilitate the separation of a part of the frame from the rest of the frame, and the dividing section is provided by a perforated section or a zone of weakness.

Advantageously, the device of the present invention may be pressed against a building element such that the perpendicular section of the frame is flush with a right angle of the element to permit the or each level indicator to be secured in exactly the horizontal or vertical plane of the element

The perpendicular arrangement of the frame defines an angle of substantially 90° and, preferably, the at least two surfaces of the frame that form this angle are substantially flat. This arrangement ensures that when the device is pressed against the right angle of a building element, the or each level indicator may be secured in exactly the horizontal or vertical plane of the element.

Preferably all surfaces of the frame are substantially flat. In a particularly preferred embodiment the device is L-shaped. The device may take other shapes however, for instance the device may be Π-shaped.

A perforated section or a zone of weakness may also provide a visual indication of the dividing section's location.

In a preferred embodiment the dividing section is located to permit the separation of a part of the frame with at least one level indicator attached (the indicator part) from the remainder of the frame including the substantially perpendicular section of the frame (the angle part).

To facilitate the fixing of the device to a building element the frame may possess one or more fixing locations. The fixing locations may, conveniently, be provided in the form of apertures through the frame which are configured to receive fixing means, such as nails or screws of the like. The fixing locations may be located toward to periphery of the frame, this is advantageous as the edges of the frame will be less capable of be snagged when fixed to the building element, thus the fixing of the device to the element is less prone to disruption. Where the frame possesses a dividing section, it is essential that fixing locations are at least present on the indicator part of the frame.

The device may be substantially permanently fixed to the building element. As the device may be produced inexpensively, the device may be fixed to the building element and left attached thereto throughout the life of the element. Also, due to the inexpensive nature of the device, the device may be rendered disposable.

Preferably the building element may be a stud, an upstanding post, such as the studwork of a prefabricated building unit. Alternatively the building element may be a truss, such as a roof truss or wall truss. As a further alternative, the building element may be a length of rigid material such a plank of wood or a rectangular section of metal or such like.

Advantageously where the building element is a stud or the like, the device may be fixed to the stud in a position that is approximately head height when the stud/studwork/prefabricated building unit is erected. This position permits a convenient determination of whether the stud is satisfactorily plumb on initial erection and subsequently.

Each stud or the like typically has a rectangular or square cross-section. Two or more studs may be secured together with a panel fixed to a rear side of the studs. When the panel is secured to the rear side of the studs, the left and right sides of the studs will face the right and left sides of adjacent studs respectively and the front sides will be available for subsequent attachment of typical fittings, such as plasterboard or the like. The channel defined between the right and left sides with the panel is suitable for the housing of typical fittings such as electrical wiring, cables, insulation and the like.

Preferably the device of the present invention is fixed to the left or right sides of the studs. This fixing of the device is preferred as the device can be conveniently viewed whilst the front side of the studs is kept clear. Additionally, in due course and before the plasterboard or the like is attached, a final check that the studs are plumb may be made and the plasterboard may be secured to the studs flush without being fettered by the fixed device.

Where the building element is a truss, the device may be fixed to the truss in a position that is suitable to be viewed when the truss is erected in its intended position. Additionally and preferably, the device will be located on the truss such that subsequent fittings are not fettered by the fixing of the device and may be fitted flush.

Furthermore, the fixing of the device to the building elements, such as the studs or trusses described above, may advantageously permit the convenient stacking of a plurality of such elements for ease of transportation without the risk of dislodging or affecting the position of the device on the building element.

Where the building element is a length of rigid material, the device may be fixed to the material to form a disposable tool. A preferred disposable tool is a disposable screed tool.

One possible use of such a disposable tool is for the levelling of a floor or a foundation, such as during the application and levelling of wet concrete. During this levelling process there is a need to routinely ensure that the surface is level. Typically, this process of levelling uses a screed, an elongate length of wood, plaster or metal. The screed is passed over the surface of the wet material to manipulate the wet material into a level surface. The operator of the screed levels the surface using their inherent skill and then uses a separate level measuring tool. Typically, such level measuring tools are reasonably expensive to manufacture and purchase, such that the screed operator will carefully remove any wet material after the surface has been satisfactorily levelled.

When a device of the present invention is fixed to length of rigid material, such a plank of wood or a rectangular section of metal or such like, the device and material can advantageously be used as a disposable screed tool. The fixing of the device to the material permits the screed tool to be used as an accurate level measuring tool. Advantageously, such a screed tool may be used as a screed and a levelling tool which makes levelling a floor quicker and easier for the user as an interchange of tools is not required. Additionally, due to the inexpensive nature of the screed and the device, in the event of the screed becoming coated with wet material, the user may dispose of the tool.

In a particularly preferred embodiment of the present invention, the level indicator is provided in the form of a spirit level. Ideally, the device of the present invention has a single level indicator.

Alternatively, the device of the present invention may have two level indicators. Where there are two level indicators, they are preferably located on the same surface of the device secured at 90° with respect to each other, such that when fixed to a building element, each indicator may be used to monitor different planes of the element. The ability to monitor different planes of the element simultaneously may be advantageous when the device is being used as part of a screed tool.

The frame is preferably made from a plastics material as this is relatively inexpensive to mass produce. However, the frame may also be made from wood or sheet metal.

According to a second aspect of the present invention there is provided a method of constructing a building, wherein a device comprising a frame having at least two substantially flat surfaces arranged substantially perpendicular to each other and at least one level indicator attached to the frame, wherein at least a portion of the device with said at least one level indicator attached is fixed to a building element and wherein the device has at least one dividing section adapted to facilitate the separation of a part of the frame from the rest of the frame, and the dividing section is provided by a perforated section or a zone of weakness.

### Brief Description of the Drawings

In order to allow the present invention to be more readily understood, embodiments thereof will be described by way of example and with reference to the following drawings, in which:
Fig. 1 - is a side view of a device of the present invention;
Fig. 2 - is a perspective view of a device of the present invention; and
Fig. 3 - is a perspective view of a prefabricated building unit with devices according to the present invention attached.

### Description of an Embodiment

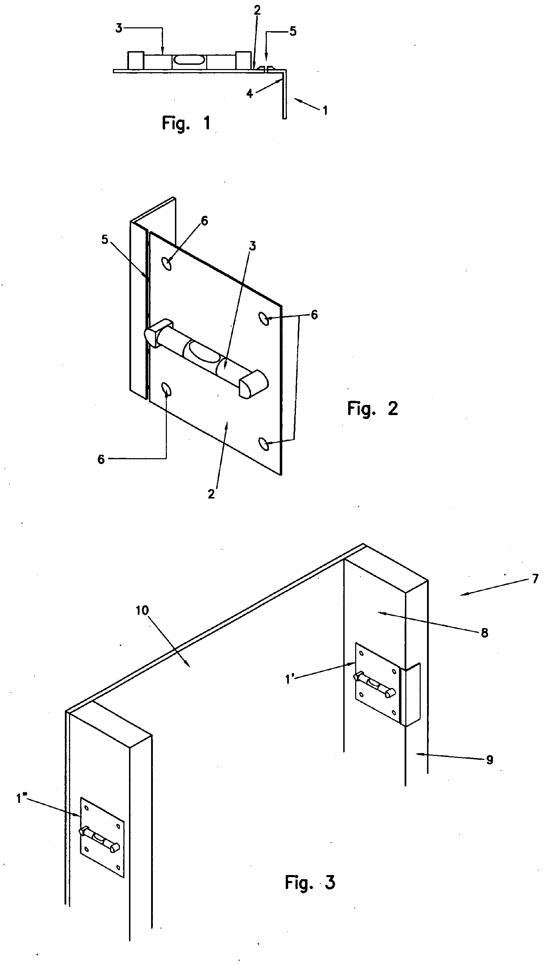

Figures 1 and 2 illustrate a device 1 of the present invention. It can be seen that the device 1 has a generally L-shaped frame 2 comprising a perpendicular section 4 having an angle of substantially 90°.

The frame 2 is formed from a substantially flat sheet material, such as a plastics material, sheet metal or wood.

In the depicted embodiment, the larger section of the L-shaped frame 2 has a level indicator 3 attached to its upper surface. The level indicator 3 may, advantageously, be a spirit level which is readily available and inexpensive. Located between the larger section of the frame 2 and the perpendicular section 4 is a dividing section 5. The dividing section 5 permits the frame 2 to be separated into two discrete parts. The purpose of this dividing section 5 will be described in more detail below.

Fixing locations 6 are present in the larger section of the frame 2. Preferably the fixing locations 6 are apertures through the larger section of the frame 2 that are sized to accommodate suitable fixing means such as nails or screws. The fixing locations 6 surround the level indicator 3 and permit the secure fixing of the device 1 to a building element.

Turning to Fig 3, the device 1 is shown in co-operation with a pre-fabricated building unit 7 in the form of studwork. The pre-fabricated building unit 7 comprises at least 2 studs, upstanding posts, which have a panel 10 connected therebetween. The pre-fabricated unit could consist of an open framework however, thus allowing panels or the like to be attached to the front and rear side of the studs. The open framework arrangement would be particularly useful for the construction of internal walls therefore.

To attach the device 1 to the unit 7, the lower flat surfaces of the frame 2 are pressed against the left side 8 and the front side 9 of the stud such that the perpendicular section 4 exactly engages with the right angle of the stud, i.e. the edge defined between the left side 8 and front side 9 of the stud. The device 1' in Fig 3 is exactly engaged with the stud and, due to the shape of the frame 2 with its substantially flat sides and the perpendicular section 4, the large section of the device with the level indicator 3 is arranged exactly in the stud's horizontal plane. The device 1' can be secured in position by introducing a fixing means, such as screws or nails, in the fixing locations 6 on the large section of the frame whilst the device 1' is held flush against the stud. Once secured, the device 1' provides an accurate means for registering whether or not the stud is in correct vertical alignment by a quick reference to the level indicator 3.

On the adjacent stud depicted in Fig 3 is device 1" where the smaller section of the frame 2 including the perpendicular section 4 has been removed from the larger section of the frame 2 which has been secured to the stud. The device 1" is separated along the dividing section 5 with the smaller section of the frame 2 being discarded. The removal of the smaller portion of the frame 2 can be advantageous as the front side 9 of the stud is then free from any encumbrance by the device 1" and subsequent attachment of plasterboard or the like to the front face of the stud will not be impaired.

Furthermore, by keeping at least the front side of the studs free from any encumbrance, the convenient stacking of a plurality of pre-fabricated building units 7 can be achieved for ease of transportation without the risk of dislodging or affecting the position of the device 1" on the studs.

It will of course be understood that there can be modifications and variations of the above described embodiment that are captured within the present invention.

For instance, the frame 2 may have a Π-shaped frame where the middle of the n is of identical width to the front side of a stud. In this arrangement there may be a level indicator on both of the upstanding sides of the frame. In operation, the device could be connected around the front side of a stud and each upstanding side of the frame could be fixed to the left and right side of the stud. Dividing sections could be present on both of the upstanding parts of the frame to permit the middle of the frame to be removed and discarded so that the front side of the stud is free from any encumbrance.

## Claims

1. A device (1, 1', 1") comprising a frame (2) having at least two surfaces arranged substantially perpendicular to each other and at least one level indicator (3) attached to the frame (2), wherein at least a portion of the device (1, 1', 1") with the at least one level indicator (3) attached is adapted to be fixed to a building element (7), **characterised in that** the device (2) has at least one dividing section (5) adapted to facilitate the separation of a part of the frame (2) from the rest of the frame (2), wherein the dividing section (5) is provided by a perforated section or a zone of weakness.

2. A device (1, 1', 1") according to claim 1, wherein the dividing section (5) is located to permit the separation of a part of the frame with at least one level indicator attached from the remainder of the frame including the substantially perpendicular section of the frame.

3. A device (1, 1', 1") according to any preceding claim, wherein the at least two surfaces, and optionally all of the surfaces, of the frame (2) are substantially flat.

4. A device (1, 1', 1") according to any preceding claim, wherein the device (1, 1', 1") is L-shaped.

5. A device (1, 1', 1") according to any preceding claim, wherein the frame (2) has one or more fixing locations.

6. A device (1, 1', 1") according to any preceding claim, wherein the device (1, 1', 1") is adapted to be substantially permanently fixed to the building element (7).

7. A device according to any preceding claim, wherein the level indicator (3) is a spirit level.

8. A device according to any preceding claim, wherein the frame (2) is made from a plastics material.

9. A method of constructing a building, wherein a device (1, 1', 1") comprising a frame (2) having at least two substantially flat surfaces arranged substantially perpendicular to each other and at least one level indicator (3) attached to the frame (2), wherein at least a portion of the device (1, 1', 1") with the at least one level indicator (3) attached is fixed to a prefabricated building unit (7) prior to being erected at a building site, **characterised in that** the device (1, 1', 1") has at least one dividing section (5) adapted to facilitate the separation of a part of a frame from the rest of the frame (2) and the dividing section (5) is provided by a perforated section or a zone of weakness.

10. A prefabricated building unit (7) with a device (1, 1', 1") fixed thereto, wherein the device is a device according to claim 1, and at least a portion of the device (1, 1', 1 ") is fixed to the prefabricated building unit.

11. A prefabricated building unit according to claim 10, wherein the unit is one of : studwork, a truss.

12. A disposable tool comprising a length of rigid material with a device fixed thereto, wherein the device (1, 1', 1") is a device according to claim 1, wherein at least a portion of the device (1, 1', 1") is fixed to the length of rigid material.

13. A disposable tool according to claim 12, wherein the tool is a disposable screed tool.

## Patentansprüche

1. Vorrichtung (1, 1', 1"), die einen Rahmen (2) mit wenigstens zwei im Wesentlichen senkrecht zueinander angeordneten Oberflächen und wenigstens einen Niveauanzeiger (3), der an dem Rahmen (2) befestigt ist, enthält, wobei wenigstens ein Abschnitt der Vorrichtung (1, 1', 1") mit dem wenigstens einen befestigten Niveauanzeiger (3) dazu ausgelegt ist, an einem Gebäudeelement (7) befestigt zu werden, **dadurch gekennzeichnet, dass** die Vorrichtung (2) wenigstens einen Trennungsabschnitt (5) aufweist, der dazu ausgelegt ist, die Abtrennung eines Teils des Rahmens (2) von dem Rest des Rahmens (2) zu erleichtern, wobei der Trennungsabschnitt (5) durch einen perforierten Abschnitt oder durch eine Schwächungszone geschaffen ist.

2. Vorrichtung (1, 1', 1") nach Anspruch 1, wobei der Trennungsabschnitt (5) so angeordnet ist, dass er die Abtrennung eines Teils des Rahmens mit wenigstens einem befestigten Niveauanzeiger von dem Rest des Rahmens, der den im Wesentlichen senkrechten Abschnitt des Rahmens aufweist, zulässt.

3. Vorrichtung (1, 1', 1") nach einem vorhergehenden Anspruch, wobei die wenigstens zwei Oberflächen und optional alle Oberflächen des Rahmens (2) im Wesentlichen eben sind.

4. Vorrichtung (1, 1', 1") nach einem vorhergehenden Anspruch, wobei die Vorrichtung (1, 1', 1") L-förmig ist.

5. Vorrichtung (1, 1', 1") nach einem vorhergehenden Anspruch, wobei der Rahmen (2) eine oder mehrere Befestigungsstellen besitzt.

6. Vorrichtung (1, 1', 1") nach einem vorhergehenden Anspruch, wobei die Vorrichtung (1, 1', 1") dazu ausgelegt ist, an dem Gebäudeelement (7) im Wesentlichen dauerhaft befestigt zu werden.

7. Vorrichtung nach einem vorhergehenden Anspruch, wobei der Niveauanzeiger (3) eine Wasserwaage ist.

8. Vorrichtung nach einem vorhergehenden Anspruch, wobei der Rahmen (2) aus einem Kunststoff hergestellt ist.

9. Verfahren zum Bauen eines Gebäudes, wobei eine Vorrichtung (1, 1', 1") einen Rahmen (2) mit wenigstens zwei im Wesentlichen ebenen Oberflächen, die im Wesentlichen senkrecht zueinander angeordnet sind, und wenigstens einen Niveauanzeiger (3), der am Rahmen (2) befestigt ist, enthält, wobei wenigstens ein Abschnitt der Vorrichtung (1, 1', 1") mit dem wenigstens einen befestigten Niveauanzeiger (3) an einer vorgefertigten Gebäudeeinheit (7) befestigt wird, bevor diese an einem Gebäudeort aufgerichtet wird, **dadurch gekennzeichnet, dass** die Vorrichtung (1, 1', 1") wenigstens einen Trennungsabschnitt (5) aufweist, der dazu ausgelegt ist, die Abtrennung eines Teils eines Rahmens von dem Rest des Rahmens (2) zu erleichtern, und der Trennungsabschnitt (5) durch einen perforierten Abschnitt oder durch eine Schwächungszone geschaffen ist.

10. Vorgefertigte Gebäudeeinheit (7) mit einer daran befestigten Vorrichtung (1, 1', 1"), wobei die Vorrichtung eine Vorrichtung nach Anspruch 1 ist und wobei wenigstens ein Abschnitt der Vorrichtung (1, 1', 1") an der vorgefertigten Gebäudeeinheit befestigt ist.

11. Vorgefertigte Gebäudeeinheit nach Anspruch 10, wobei die Einheit eines der folgenden Elemente ist: Fachwerkswand, ein Baugerippe.

12. Wegwerfbares Werkzeug, das ein Teilstück aus starrem Material mit einer daran befestigten Vorrichtung enthält, wobei die Vorrichtung (1, 1', 1") eine Vorrichtung nach Anspruch 1 ist, wobei wenigstens ein Abschnitt der Vorrichtung (1, 1', 1") an dem Teilstück aus starrem Material befestigt ist.

13. Wegwerfbares Werkzeug nach Anspruch 12, wobei das Werkzeug ein wegwerfbares Glättbalkenwerkzeug ist.

## Revendications

1. Dispositif (1, 1', 1") comprenant un cadre (2) ayant au moins deux surfaces agencées substantiellement perpendiculairement l'une à l'autre et au moins un indicateur de niveau (3) attaché au cadre (2), au moins une portion du dispositif (1, 1', 1") sur laquelle est attaché l'au moins un indicateur de niveau (3) étant adaptée pour être fixée à un élément de construction (7), **caractérisé en ce que** le dispositif (2) a au moins une section de séparation (5) prévue pour faciliter la séparation d'une partie du cadre (2) du reste du cadre (2), la section de séparation (5) étant pourvue d'une section perforée ou d'une zone d'affaiblissement.

2. Dispositif (1, 1', 1") selon la revendication 1, dans lequel la section de séparation (5) est située de manière à permettre la séparation d'une partie du cadre sur laquelle est attaché l'au moins un indicateur de niveau du reste du cadre comportant la section substantiellement perpendiculaire du cadre.

3. Dispositif (1, 1', 1") selon l'une quelconque des revendications précédentes, dans lequel les au moins deux surfaces, et éventuellement toutes les surfaces du cadre (2) sont substantiellement plates.

4. Dispositif (1, 1', 1") selon l'une quelconque des revendications précédentes, dans lequel le dispositif (1, 1', 1") est en forme de L.

5. Dispositif (1, 1', 1") selon l'une quelconque des revendications précédentes, dans lequel le cadre (2) a un ou plusieurs emplacements de fixation.

6. Dispositif (1, 1', 1") selon l'une quelconque des revendications précédentes, dans lequel le dispositif (1, 1', 1") est prévu pour être fixé substantiellement de manière permanente à l'élément de construction (7).

7. Dispositif selon l'une quelconque des revendications précédentes, dans lequel l'indicateur de niveau (3) est un niveau à bulle.

8. Dispositif selon l'une quelconque des revendications précédentes, dans lequel le cadre (2) est fabriqué en un matériau plastique.

9. Procédé de construction d'un bâtiment, dans lequel un dispositif (1, 1', 1") comprend un cadre (2) ayant au moins deux surfaces substantiellement plates arrangées substantiellement perpendiculairement l'une à l'autre et au moins un indicateur de niveau (3) attaché au cadre (2), au moins une portion du dispositif (1, 1', 1") sur laquelle est attaché l'au moins un indicateur de niveau (3) étant fixée à une unité de construction préfabriquée (7) avant d'être installée sur un site de construction, **caractérisé en ce que** le dispositif (1, 1', 1") a au moins une section de séparation (5) prévue pour faciliter la séparation d'une partie d'un cadre du reste du cadre (2) et la section de séparation (5) est réalisée par une section perforée ou une zone d'affaiblissement.

10. Unité de construction préfabriquée (7) avec un dispositif (1, 1', 1") fixé sur celle-ci, dans laquelle le dispositif est un dispositif selon la revendication 1, et au moins une portion du dispositif (1, 1', 1") est fixée à l'unité de construction préfabriquée.

11. Unité de construction préfabriquée selon la revendication 10, dans laquelle l'unité est un système à ossature murale ou une ferme.

12. Outil jetable comprenant une longueur de matériau rigide avec un dispositif fixé sur celui-ci, dans lequel le dispositif (1, 1', 1") est un dispositif selon la revendication 1, au moins une portion du dispositif (1, 1', 1") étant fixée à la longueur de matériau rigide.

13. Outil jetable selon la revendication 12, dans lequel l'outil est un outil à araser jetable.
